# FASCICULE DE BREVET EUROPEEN

(11) **EP 3 482 088 B1**
(45) Date de publication et mention de la délivrance du brevet: **16.11.2022**
(21) Numéro de dépôt: 17734103.9
(22) Date de dépôt: 03.07.2017
(51) Int. Cl.: F16B 19/10

(54) **RIVET DE FIXATION AVEUGLE AVEC FÛT ÉPAULÉ ET PROCÉDÉ D'INSTALLATION ASSOCIÉ**
BLINDNIET MIT EINER SCHULTERHÜLSE UND ZUGEHÖRIGES INSTALLATIONSVERFAHREN
BLIND FITTING RIVET HAVING A SHOULDER SLEEVE, AND ASSOCIATED INSTALLATION METHOD

(30) Priorité: 06.07.2016 FR 1656469
(43) Date de publication de la demande: 15.05.2019
(73) Titulaire: Lisi Aerospace, 75012 Paris (FR)
(72) Inventeur: PAILHORIES, Guy, 12200 Villefranche de Rouergue (FR); GAY, Olivier, 95450 Commeny (FR)
(74) Mandataire: Lavoix
(86) Numéro de dépôt international: PCT/EP2017/066511
(87) Numéro de publication internationale: WO 2018/007324

(56) Documents cités:
- EP-A1- 2 960 531
- WO-A2-2011/100658
- FR-A1- 3 016 417
- US-A- 2 324 142
- US-A- 2 415 560
- US-A1- 2004 231 467

## Description

La présente invention concerne un assemblage comprenant un rivet de fixation, du type comportant : une vis comprenant une portion filetée, un fût et une tête ; et une douille comprenant un corps, ledit corps comprenant une zone de serrage, sensiblement cylindrique et apte à recevoir le fût de la vis, et une zone de déformation, adjacente à la zone de serrage ; une collerette adjacente à la zone de serrage et apte à recevoir la tête de la vis ; et une portion taraudée adjacente à la zone de déformation et apte à coopérer avec la portion filetée de la vis.

L'invention s'applique particulièrement aux fixations aveugles, c'est-à-dire aux fixations installées au travers de structures par un seul côté desdites structures, communément appelées côté « accessible ». Ces fixations sont notamment utilisées dans l'assemblage de structures d'aéronef.

Un rivet du type précité et un procédé d'installation associé sont notamment décrits dans le document FR3016417. Le document US 2,415,560 décrit un autre type de rivet de fixation.

Il arrive que la déformation de la douille, à l'origine du bulbe externe, affecte également la zone de serrage. En particulier, un renflement peut se former à l'intérieur de la douille, à proximité du bulbe externe. Lors de l'installation du rivet, ce renflement interne peut conduire à un grippage entre la zone de serrage de la douille et le fût de la vis, nécessitant un effort de vissage plus important.

La présente invention a pour but de résoudre ce problème, notamment en facilitant le vissage de la vis dans la douille après la formation du bulbe externe.

A cet effet, l'invention a pour objet un assemblage du type précité, tel que défini dans la revendication 1.

Suivant d'autres aspects avantageux de l'invention, l'assemblage comporte l'une ou plusieurs des caractéristiques suivantes, prises isolément ou suivant toutes les combinaisons techniquement possibles :
- le second diamètre est compris entre 80% et 95% du premier diamètre ;
- l'épaulement est configuré de sorte à former une transition progressive entre les premier et second diamètres ;
- un diamètre maximal de la portion filetée est inférieur ou égal au premier diamètre de la première portion du fût ;
- un diamètre maximal de la portion filetée est inférieur ou égal au second diamètre de la seconde portion du fût ;
- le rivet présente une capacité maximale de serrage et une capacité minimale de serrage, une longueur de la seconde portion du fût de la vis correspondant à une différence entre lesdites capacités maximale et minimale de serrage ;
- la vis comprend en outre un élément de préhension relié à la tête par une gorge de rupture.

Selon un mode de réalisation préférentiel, un espace radial est ménagé entre le renflement interne de la douille et la seconde portion du fût de la vis.

L'invention se rapporte en outre à un procédé d'installation selon la revendication 9. Un mode de réalisation préférentiel est décrit dans la revendication dépendante 10.

L'invention sera mieux comprise à la lecture de la description qui va suivre, donnée uniquement à titre d'exemple non limitatif et faite en se référant aux dessins sur lesquels :
- la figure 1 est une vue en coupe d'un assemblage selon un mode de réalisation de l'invention, dans une configuration initiale ;
- la figure 2 est une vue en coupe de l'assemblage de la figure 1, dans une configuration intermédiaire d'installation ;
- la figure 3 est une vue partielle, en coupe, de l'assemblage des figures 1 et 2, dans une configuration installée, et
- la figure 4 est une vue de détail de la figure 3.

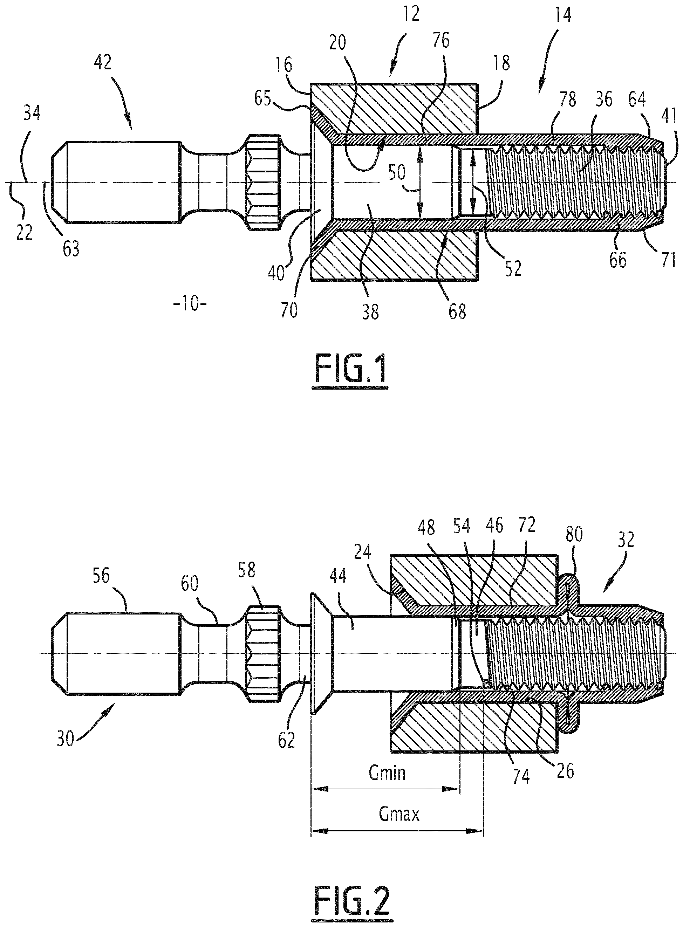

Les figures 1 à 4 représentent un assemblage 10 selon un même mode de réalisation de l'invention. L'assemblage 10 comporte une structure 12 et un rivet de fixation 14.

La structure 12 comprend une première face 16 et une deuxième face 18, opposée à la première face 16. Les première 16 et deuxième 18 faces sont sensiblement planes et parallèles entre elles.

On considère que la première face 16 de la structure 12 est accessible à un opérateur, tandis que la deuxième face 18, ou face aveugle, est non accessible.

Préférentiellement, les première 16 et deuxième 18 faces appartiennent à au moins deux éléments de structure distincts. Lesdits éléments de structure sont par exemple métalliques ou en matériaux composites. Pour simplifier, un seul élément de structure est représenté sur les figures 1 à 4.

La structure 12 comprend en outre un alésage 20 débouchant sur chacune des première 16 et deuxième 18 faces. L'alésage 20 est disposé selon un premier axe 22 sensiblement perpendiculaire aux première 16 et deuxième 18 faces.

L'alésage 20 comporte une surface fraisée 24, adjacente à la première face 16, et une surface cylindrique 26, adjacente à la surface fraisée et s'étendant depuis jusqu'à la deuxième face 18. La surface fraisée 24 présente une forme sensiblement tronconique.

Le rivet de fixation 14 est apte à solidariser les éléments de structure formant la structure 12. Ledit rivet comporte une vis 30 et une douille 32, destinées à être insérées dans l'alésage 20. De préférence, la vis 30 et la douille 32 sont métalliques, par exemple en acier inoxydable du type A286, ou en alliage de titane.

La vis 30 comporte une portion filetée 36, un fût 38 et une tête 40, alignés selon un deuxième axe 34. Une première extrémité 41 de la vis 30, selon ledit deuxième axe 34, est formée par une extrémité libre de la portion filetée 36. La vis 30 comprend en outre un élément de préhension 42, adjacent à la tête 40 et formant une seconde extrémité de la vis 30 selon le deuxième axe 34.

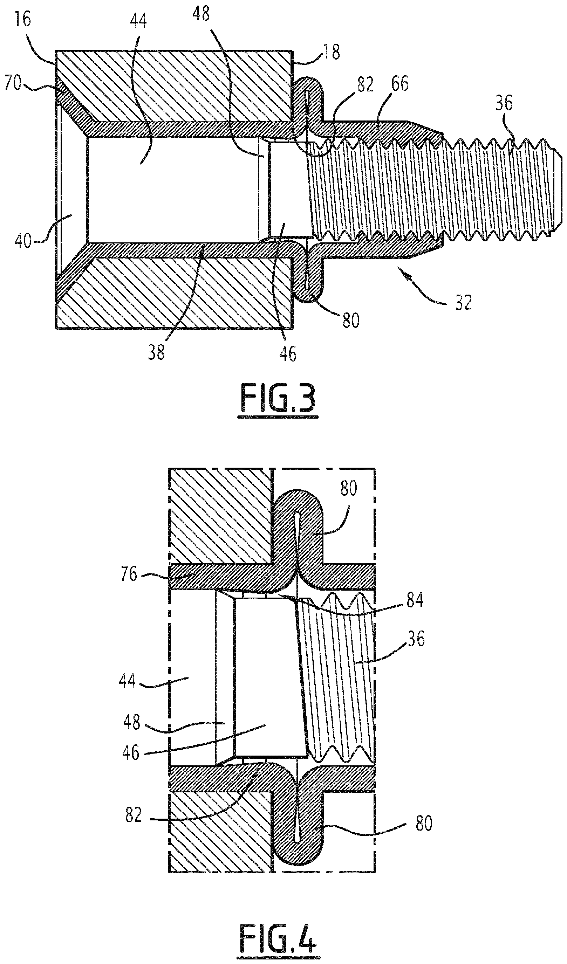

Dans le mode de réalisation des figures 1 à 4, la tête 40 est une tête fraisée, destinée à affleurer la première face 16 de la structure 12 dans la configuration installée de la figure 4.

Le fût 38 de la vis comporte une première 44 et une seconde 46 portions, reliées par un épaulement 48. Chacune des première 44 et seconde 46 portions a une forme sensiblement cylindrique de révolution, disposée selon le deuxième axe 34.

La première portion 44 est adjacente à la tête 40 et présente un premier diamètre 50. La seconde portion 46 est adjacente à la portion filetée 36 et présente un second diamètre 52, inférieur au premier diamètre 50. A titre indicatif, le second diamètre 52 est compris entre 80% et 95% du premier diamètre 50.

L'épaulement 48 entre les première 44 et seconde 46 portions forme de préférence une transition progressive entre le premier 50 et le second 52 diamètre. L'épaulement 48 a par exemple une forme tronconique ou incurvée.

Le rivet 14 présente une capacité maximale de serrage Gₘₐₓ (Fig. 2), qui correspond à l'épaisseur maximale de la structure 12 que le rivet 14 peut assembler. Cette capacité maximale de serrage Gₘₐₓ est représentée par une longueur de la tête 40 et du fût 38 selon le deuxième axe 34, jusqu'à une limite 54 de la portion filetée 36.

De même, le rivet 14 présente une capacité minimale de serrage Gₘᵢₙ (Fig. 2), qui correspond à l'épaisseur minimale de la structure 12 que le rivet 14 peut assembler. Dans le mode de réalisation des figures 1 à 4, l'épaisseur de la structure 12 selon le premier axe 22 est comprise entre Gₘₐₓ et Gₘᵢₙ.

Dans l'état de la technique, la capacité minimale de serrage Gₘᵢₙ est définie par le fabricant mais n'est pas nécessairement matérialisée par un marquage sur le rivet. Dans le cadre de la présente invention, une longueur de la seconde portion 46 du fût 38, selon le deuxième axe 34, est préférentiellement choisie de manière à correspondre à une différence entre Gₘₐₓ et Gₘᵢₙ. Les capacités maximale et minimale de serrage du rivet 14 sont donc apparentes sur la vis 30.

L'élément de préhension 42 de la vis 30 est apte à coopérer avec un outil de pose pour une installation automatisée du rivet de fixation 14. L'élément de préhension 42 comporte par exemple une première 56 et une seconde 58 portions de préhension, reliées par une portion de blocage 60. Les première 56 et seconde 58 portions de préhension et la portion de blocage 60 sont destinées respectivement à guider l'introduction du rivet 14 dans un outil de pose, à transmettre un couple de torsion et à limiter un mouvement axial du rivet dans l'outil de pose. Un rivet comprenant un tel élément de préhension, ainsi que sa coopération avec un outil de pose, sont notamment décrits dans le document FR3016617.

L'élément de préhension 42 est relié à la tête 30 par une gorge de rupture 62. Ladite gorge est notamment configurée de sorte à soutenir un certain niveau de contrainte en traction selon le deuxième axe 34, et à céder au-delà d'un certain seuil de contrainte en torsion autour dudit deuxième axe.

La douille 32 a une forme tubulaire, disposée selon un troisième axe 63 et ouverte à une première 64 et à une seconde 65 extrémités. Dans la configuration initiale de la figure 1, une longueur totale de la douille selon le troisième axe 63, entre les première 64 et seconde 65 extrémités, est sensiblement égale à une somme des longueurs de la portion filetée 36, du fût 38 et de la tête 40 de la vis 30.

La douille 32 comporte une portion taraudée 66, un corps lisse 68 et une collerette évasée 70, alignés selon le troisième axe 63.

La portion taraudée 66, dont une extrémité libre forme la première extrémité 64, est apte à coopérer avec la portion filetée 36 de la vis 30. De préférence, à proximité de la première extrémité 64, la portion taraudée 66 comporte un chanfrein 71 pour faciliter son introduction dans l'alésage 20.

La collerette 70, dont une extrémité libre forme la seconde extrémité 65, est apte à recevoir la tête 40 de la vis 30. La collerette 70 est en saillie radiale par rapport au corps lisse 68. Dans le mode de réalisation des figures 1 à 4, la collerette 70 a une forme sensiblement tronconique, complémentaire de la tête fraisée 40.

Le corps lisse 68 présente une surface externe 72 et une surface interne 74. Dans la configuration initiale de la figure 1, chacune des surfaces externe 72 et interne 74 a une forme cylindrique de révolution autour du troisième axe 63.

De préférence, un diamètre de la surface interne 74 est légèrement supérieur au premier diamètre 50 de la première portion 44 du fût 38, de manière à prévoir un jeu faible entre ledit fût 38 et le corps lisse 68. De même, un diamètre de la surface externe 72 est légèrement inférieur au diamètre de la surface cylindrique 26 de l'alésage 20, de manière à prévoir un jeu faible entre lesdites surfaces.

En variante, un diamètre de la surface externe 72 est légèrement supérieur au diamètre de la surface cylindrique 26 de l'alésage 20, de manière à prévoir un jeu négatif entre lesdites surfaces.

De préférence, un diamètre maximal de la portion filetée 36 est inférieur ou égal au premier diamètre 50 de la première portion 44 du fût 38, de manière à assurer l'existence du jeu faible entre ladite portion filetée 36 et le corps lisse 68 au moins dans la configuration initiale du rivet. Par «diamètre maximal», on entend un diamètre correspondant aux crêtes des filets. Le filetage est par exemple conforme à la norme AS8879, dans laquelle les crêtes de filet sont tronquées. Pour assurer l'existence du jeu faible entre ladite portion filetée 36 et le corps lisse 68 dans toutes les configurations du rivet, les crêtes de filets de la vis peuvent être d'avantage tronquées par rapport à la norme AS8879, le filetage de la douille restant conforme au filetage de la norme AS8879.

Pour faciliter la fabrication de la vis, le diamètre avant roulage de la portion filetée est égal au second diamètre 52. Ainsi, la vis avant roulage comporte une première portion 44 ayant un premier diamètre, et une seconde portion s'étendant jusqu'à l'extrémité de la vis ayant un second diamètre inférieur au premier diamètre, et identique sur toute la longueur de la seconde portion. Après roulage de l'extrémité, la portion filetée 36 obtenue présente un diamètre à flanc de filets égal au second diamètre 52.

En variante, le diamètre maximal de la portion filetée 36 est inférieur ou égal au second diamètre 52 de la seconde portion 46 du fût 38, de manière à assurer l'existence du jeu faible entre ladite portion filetée 36 et le corps lisse 68 dans toutes les configurations du rivet. Le filetage de la vis et de la portion taraudée de la douille peuvent être conforme à la norme AS8879. Il convient de s'assurer dans ce mode de réalisation que le diamètre minimal de la portion filetée 36 de la vis, mesurée en fond de filets, et le nombre de filets est suffisant pour résister à l'effort de traction imprimée sur la vis.

Le corps lisse 68 comprend une zone de serrage 76 et une zone de déformation 78, alignées selon le troisième axe 63. La zone de serrage 76, adjacente à la collerette 70, est notamment apte à recevoir le fût 38 de la vis 30. La zone de déformation 78, comprise entre la zone de serrage 76 et la portion taraudée 66, présente de préférence une résistance élastique inférieure à la résistance élastique du reste de la douille 32. Cette faible résistance élastique est par exemple obtenue en recuisant sélectivement la zone de déformation 78, au moyen d'une machine à induction, après la formation de la douille 32.

La zone de déformation 78 est apte à former un bulbe externe 80 au contact de la deuxième face 18 de la structure 12, notamment dans la configuration installée de la figure 3.

Un procédé d'installation de l'assemblage 10, comprenant la formation du bulbe externe 80, va maintenant être décrit.

Tout d'abord, la vis 30 et la douille 32 sont assemblées pour former le rivet de fixation 14. Plus précisément, la première extrémité 41 de la vis 30 est introduite dans la douille 32, du côté de la collerette 70 ; puis la portion filetée 36 de la vis 30 est vissée dans la portion taraudée 66 de la douille 32, jusqu'à ce que la tête 40 de la vis vienne en butée contre la collerette 70, de forme tronconique complémentaire.

Le rivet de fixation 14, dans la configuration initiale de la figure 1, est ainsi formé. La première extrémité 41 de la vis 30 est proche de l'extrémité libre 64 de la portion taraudée 66.

Les étapes suivantes sont par exemple réalisées à l'aide d'un outil de pose en prise avec l'élément de préhension 42 de la vis 30, de manière analogue au procédé décrit dans le document FR3016617.

Le rivet de fixation 14 en configuration initiale est introduit dans l'alésage 20 à partir de la première face 16 accessible de la structure 12. Le rivet 14 est déplacé selon le premier axe 22, jusqu'à la mise en butée de la collerette 70 de la douille 32 contre la surface tronconique 24 dudit alésage.

L'assemblage 10 est ainsi formé, dans la configuration initiale de la figure 1. Les premier 22, deuxième 34 et troisième 63 axes sont confondus. L'extrémité libre 65 de la collerette 70 de la douille 32, ainsi que la gorge de rupture 62 de la vis 30, affleurent la première face 16 accessible de la structure 12. La portion taraudée 66 et la zone de déformation 78 de la douille 32, ainsi que la portion filetée 36 de la vis 30, forment une saillie hors de la structure 12, du côté de la deuxième face 18 aveugle.

La douille 32 est ensuite maintenue en place dans l'alésage 20, par exemple en exerçant une poussée axiale contre l'extrémité 65 de la collerette 70. Simultanément, une traction axiale est exercée sur la vis 30, de sorte à rapprocher de la structure 12 la première extrémité 41 de ladite vis. La portion filetée 66 de la douille est entraînée par le déplacement de ladite première extrémité 41, ce qui induit une déformation plastique de la zone de déformation 78. Ladite déformation plastique conduit au bulbe externe 80 formé contre la deuxième surface 18.

L'assemblage 10 est alors dans la configuration intermédiaire de la figure 2. Le bulbe externe 80 et la deuxième face 18 d'une part, et la collerette 70 et la surface tronconique 24 d'autre part, forment des butées opposées qui bloquent axialement la douille 32 dans l'alésage 20. La longueur totale de la douille 32, entre les première 64 et seconde 65 extrémités, est inférieure à la longueur totale de la douille en configuration initiale. Par ailleurs, dans la configuration intermédiaire, le bulbe externe 80 de la douille est situé en vis-à-vis de la portion filetée 36 de la vis.

La formation du bulbe externe 80, par déformation plastique de la zone de déformation 78, entraîne une légère déformation de la zone de serrage 76 à proximité dudit bulbe. En particulier, après la formation du bulbe externe 80, la zone de serrage 76 présente un renflement interne 82 à proximité dudit bulbe externe. Au niveau dudit renflement interne 82, la surface interne 74 présente un diamètre inférieur au diamètre de ladite surface interne 74 dans le reste de zone de serrage 76.

Lorsque le diamètre maximal de la portion filetée 36 est inférieur ou égal au premier diamètre 50 de la première portion 44 du fût, et supérieur au second diamètre 52 de la seconde portion 46 du fût 38, il peut arriver, en fonction de l'épaisseur de la douille, du matériau de la douille et/ou de l'effort de traction imprimé à la vis, que le renflement interne 82 entre en contact avec une crête de filet. Ce contact n'est pas pénalisant pour l'installation du rivet car les surfaces en contact sont faibles, le filet ayant par essence une surface hélicoïdale. Un moyen de réduire le risque est de tronquer la crête de filet.

L'étape suivante du procédé d'installation est le vissage de la portion filetée 36 de la vis 30 dans la portion taraudée 66 de la douille 32. La vis 30 se déplace axialement à l'intérieur de la douille 32, jusqu'à ce que la tête 40 arrive en butée contre la collerette 70. Si le renflement interne 82 entre en contact avec une crête de filet, ce filet taraudera légèrement le renflement sans induire de couple dans la douille.

Enfin, une torsion est exercée sur l'élément de préhension 42 de manière à casser la vis 30 au niveau de la gorge de rupture 62. L'assemblage 10 est alors dans la configuration installée, représentée à la figure 3 sans l'élément de préhension 42.

Dans la configuration installée, le renflement interne 82 de la douille 32 se trouve en vis-à-vis de la seconde portion 46 du fût 38 et/ou de la portion filetée 36.

Plus précisément, dans le cas où la structure 12 a une épaisseur proche de la capacité minimale de serrage Gₘᵢₙ, le renflement interne 82 se trouve en vis-à-vis de la seconde portion 46 et éventuellement de l'épaulement 48. La seconde portion 46 est essentiellement en saillie hors de la structure 12.

Dans le cas où la structure 12 a une épaisseur proche de la capacité maximale de serrage Gₘₐₓ, le renflement interne 82 se trouve en vis-à-vis de la seconde portion 46 et de la limite 54 de la portion filetée 36. La seconde portion 46 est essentiellement reçue à l'intérieur de l'alésage 20.

Le second diamètre 52 de la seconde portion 46 du fût 38 est configuré de manière à éviter un grippage du rivet 14 lors de l'étape de vissage conduisant à la configuration installée. De préférence, le second diamètre 52 est choisi de sorte à ménager un espace radial 84 (Fig. 4) entre la seconde portion 46 et le renflement interne 82 de la douille.

Ainsi, le renflement interne 82 ne gêne pas l'étape de vissage après formation du bulbe externe 80. En particulier, il n'est pas nécessaire d'appliquer à la vis un effort de vissage plus élevé à la fin de ladite étape de vissage, avant la mise en contact de la tête 40 avec la collerette 70.

Un autre avantage lié à la seconde portion 46 de diamètre réduit par rapport à la première portion est de supprimer tout risque d'entraînement en rotation de la douille lors de l'étape d'insertion de la vis dans la douille. En effet, si le jeu entre l'intérieur de la douille et le fût est très faible, le contact entre le fût de la vis et le renflement interne 82 se réalise sur tout le pourtour du fût et du renflement. Les frottements induits par la rotation de la vis dans la douille seront alors d'autant plus grands que la surface de contact entre les deux éléments est grande.

En comparaison, une vis dotée d'un fût présentant un seul diamètre équivalent à la première portion, maximisé pour augmenter la résistance au cisaillement du rivet, présentera donc un risque élevé de rotation de la douille.

Dans une autre comparaison, une vis dotée d'un fût présentant un seul diamètre équivalent à la seconde portion permettant d'écarter tout risque d'entraînement en rotation de la douille, aura l'inconvénient de présenter une résistance au cisaillement plus faible.

Selon une variante (non représentée) au mode de réalisation des figures 1 à 4, la tête 40 de la vis 30 est une tête protubérante, destinée à former une saillie par rapport à la première face 16 de la structure 12. L'alésage 20 a alors une forme cylindrique dépourvue de surface fraisée 24. La collerette 70 de la douille 32 est sensiblement plane et vient en appui contre la première face 16 de la structure 12. Selon cette variante, la longueur de la tête 40 n'est pas comprise dans les capacités maximale Gₘₐₓ et minimale Gₘᵢₙ de serrage du rivet de fixation 14.

## Revendications

1. Assemblage (10) comprenant :
- au moins une structure (12) comprenant une première (16) et une seconde (18) surfaces opposées et un alésage (20) débouchant sur chacune desdites surfaces ; et
- un rivet comprenant :
- une vis (30) comprenant : une portion filetée (36), un fût (38) et une tête (40) ; et
- une douille (32) comprenant : un corps (68), ledit corps comprenant une zone de serrage (76) sensiblement cylindrique et apte à recevoir le fût de la vis, et une zone de déformation (78), adjacente à la zone de serrage ; une collerette (70) adjacente à la zone de serrage et apte à recevoir la tête de la vis ; et une portion taraudée (66) adjacente à la zone de déformation et apte à coopérer avec la portion filetée de la vis ;
le fût (38) de la vis comportant une première (44) et une seconde (46) portions cylindriques reliées par un épaulement (48), la première portion étant adjacente à la tête et présentant un premier diamètre (50), la seconde portion étant adjacente à la portion filetée et présentant un second diamètre (52), inférieur au premier diamètre,
dans lequel :
- la collerette (70) de la douille est au contact de la première surface (16) ;
- la tête (40) de la vis est au contact de ladite collerette ;
- la zone de déformation (78) du corps de la douille issue d'une configuration initiale sensiblement cylindrique est dans une configuration installée, sous forme d'un bulbe externe (80) au contact de la seconde surface ; et
- la zone de serrage (76) du corps de la douille présente un renflement interne (82) adjacent au bulbe externe, ledit renflement interne étant disposé en vis-à-vis de la seconde portion (46) du fût de la vis.

2. Assemblage selon la revendication 1, dans lequel le second diamètre (52) du fût de la vis est compris entre 80% et 95% du premier diamètre (50) dudit fût.

3. Assemblage selon la revendication 1 ou la revendication 2, dans lequel l'épaulement est configuré de sorte à former une transition progressive entre les premier (50) et second (52) diamètres.

4. Assemblage selon l'une des revendications précédentes, dans lequel un diamètre maximal de la portion filetée (36) de la vis est inférieur ou égal au premier diamètre (50) de la première portion (46) du fût (38).

5. Assemblage selon l'une des revendications précédentes, dans lequel un diamètre maximal de la portion filetée (36) est inférieur ou égal au second diamètre (52) de la seconde portion (46) du fût (38).

6. Assemblage selon l'une des revendications précédentes, dans lequel le rivet présente une capacité maximale (Gₘₐₓ) de serrage et une capacité minimale (Gₘᵢₙ) de serrage, une longueur de la seconde portion (46) du fût de la vis correspondant à une différence entre lesdites capacités maximale et minimale de serrage.

7. Assemblage selon l'une des revendications précédentes, dans lequel un espace radial (84) est ménagé entre le renflement interne (82) de la douille et la seconde portion (46) du fût de la vis.

8. Assemblage selon l'une des revendications précédentes, dans lequel la vis (30) du rivet (14) comprend en outre un élément de préhension (42) relié à la tête (40) par une gorge de rupture (62).

9. Procédé d'installation d'un assemblage selon l'une des revendications précédentes, à partir d'un rivet comprenant :
- une vis (30) comprenant : une portion filetée (36), un fût (38) et une tête (40) ; et
- une douille (32) comprenant un corps (68) sensiblement cylindrique, ledit corps comprenant une zone de serrage (76) apte à recevoir le fût de la vis, et une zone de déformation (78), adjacente à la zone de serrage et apte à former un bulbe externe (80) ; une collerette (70) adjacente à la zone de serrage et apte à recevoir la tête de la vis ; et une portion taraudée (66) adjacente à la zone de déformation et apte à coopérer avec la portion filetée de la vis ;
le fût (38) de la vis comportant une première (44) et une seconde (46) portions cylindriques reliées par un épaulement (48), la première portion étant adjacente à la tête et présentant un premier diamètre (50), la seconde portion étant adjacente à la portion filetée et présentant un second diamètre (52), inférieur au premier diamètre,
ledit procédé comprenant successivement les étapes suivantes :
- assemblage de la portion filetée (36) de la vis avec la portion taraudée (66) de la douille, la zone de déformation (78) du corps de ladite douille étant dans une configuration initiale cylindrique ;
- insertion de la douille dans l'alésage (20) de la structure, du côté de la première surface ;
- maintien de la collerette (70) au contact de la première surface et traction axiale sur la vis (30), de sorte à déformer la zone de déformation (78) du corps de la douille pour former le bulbe externe (80) de la configuration installée, le renflement interne (82) de la zone de serrage (76) étant simultanément formé ; et
- vissage de la vis dans la douille jusqu'à mise en contact de la tête (40) de la vis et de la collerette (70) de la douille, la seconde portion (46) du fût de la vis étant alors disposée en vis-à-vis du renflement interne (82).

10. Procédé d'installation selon la revendication 9, d'un assemblage selon la revendication 8, le procédé comprenant ensuite une étape de séparation de l'élément de préhension (42) d'avec la tête (40) de la vis, par rupture de la gorge de rupture (62).

## Patentansprüche

1. Anordnung (10), umfassend:
- mindestens eine Struktur (12), umfassend eine erste (16) und eine zweite (18) gegenüberliegende Oberfläche und eine Bohrung (20), die in jede der Oberflächen mündet; und
- ein Niet, umfassend:
- eine Schraube (30), umfassend: einen Gewindeabschnitt (36), einen Schaft (38) und einen Kopf (40); und
- eine Hülse (32), umfassend: einen Körper (68), der Körper umfassend einen Klemmbereich (76), der im Wesentlichen zylindrisch und geeignet ist, den Schaft der Schraube aufzunehmen, und einen Verformungsbereich (78), der an den Klemmbereich angrenzt, umfasst; einen Bund (70), der an den Klemmbereich angrenzt und geeignet ist, um den Kopf der Schraube aufzunehmen; und einen Gewindeabschnitt (66), der an den Verformungsbereich angrenzt und geeignet ist, um mit dem Gewindeabschnitt der Schraube zusammenzuwirken;
der Schaft (38) der Schraube umfassend einen ersten (44) und einen zweiten (46) zylindrischen Abschnitt, die durch eine Schulter (48) verbunden sind, wobei der erste Abschnitt an den Kopf angrenzt und einen ersten Durchmesser (50) aufweist, und der zweite Abschnitt an den Gewindeabschnitt angrenzt und einen zweiten Durchmesser (52) aufweist, der kleiner ist als der erste Durchmesser,
wobei:
- der Bund (70) der Hülse in Kontakt mit der ersten Oberfläche (16) ist;
- der Kopf (40) der Schraube in Kontakt mit dem Bund ist;
- der Verformungsbereich (78) des Hülsenkörpers, der aus einer anfänglichen, im Wesentlichen zylindrischen Konfiguration hervorgegangen ist, in einer installierten Konfiguration in Form einer äußeren Wölbung (80) in Kontakt mit der zweiten Oberfläche ist; und
- der Klemmbereich (76) des Hülsenkörpers eine innere Ausbauchung (82) angrenzend an die äußere Wölbung aufweist, wobei die innere Ausbauchung gegenüber dem zweiten Abschnitt (46) des Schafts der Schraube angeordnet ist.

2. Anordnung nach Anspruch 1, wobei der zweite Durchmesser (52) des Schafts der Schraube zwischen 80 % und 95 % des ersten Durchmessers (50) des Schafts liegt.

3. Anordnung nach Anspruch 1 oder 2, wobei die Schulter konfiguriert ist, um einen allmählichen Übergang zwischen dem ersten (50) und dem zweiten (52) Durchmesser zu bilden.

4. Anordnung nach einem der vorherigen Ansprüche, wobei ein maximaler Durchmesser des Gewindeabschnitts (36) der Schraube kleiner als oder gleich wie er erste Durchmesser (50) des ersten Abschnitts (46) des Schafts (38) ist.

5. Anordnung nach einem der vorherigen Ansprüche, wobei ein maximaler Durchmesser des Gewindeabschnitts (36) kleiner als oder gleich wie der zweite Durchmesser (52) des zweiten Abschnitts (46) des Schafts (38) ist.

6. Anordnung nach einem der vorherigen Ansprüche, wobei der Niet eine maximale Klemmkapazität (Gₘₐₓ) und eine minimale Klemmkapazität (Gₘᵢₙ) aufweist, wobei eine Länge des zweiten Abschnitts (46) des Schafts der Schraube einer Differenz zwischen der maximalen und der minimalen Klemmkapazität entspricht.

7. Anordnung nach einem der vorherigen Ansprüche, wobei zwischen der inneren Ausbauchung (82) der Hülse und dem zweiten Abschnitt (46) des Schafts der Schraube ein radialer Raum (84) ausgebildet ist.

8. Anordnung nach einem der vorherigen Ansprüche, wobei die Schraube (30) des Niets (14) ferner ein Greifelement (42) umfasst, das über eine Bruchkehle (62) mit dem Kopf (40) verbunden ist.

9. Verfahren zur Installation einer Anordnung nach einem der vorherigen Ansprüche, anhand eines Niets, umfassend:
- eine Schraube (30), umfassend: einen Gewindeabschnitt (36), einen Schaft (38) und einen Kopf (40); und
- eine Hülse (32), umfassend einen im Wesentlichen zylindrischen Körper (68), der Körper umfassend einen Klemmbereich (76), der geeignet ist, um den Schaft der Schraube aufzunehmen, und einen Verformungsbereich (78), der an den Klemmbereich angrenzt, und geeignet ist, um eine äußere Wölbung (80) zu bilden; einen Bund (70), der an den Klemmbereich angrenzt und geeignet ist, um den Kopf der Schraube aufzunehmen; und einen Gewindeabschnitt (66), der an den Verformungsbereich angrenzt und geeignet ist, um mit dem Gewindeabschnitt der Schraube zusammenzuwirken;
der Schaft (38) der Schraube umfassend einen ersten (44) und einen zweiten (46) zylindrischen Abschnitt, die durch eine Schulter (48) verbunden sind, wobei der erste Abschnitt an den Kopf angrenzt und einen ersten Durchmesser (50) aufweist, und der zweite Abschnitt an den Gewindeabschnitt angrenzt und einen zweiten Durchmesser (52) aufweist, der kleiner ist als der erste Durchmesser,
das Verfahren umfassend aufeinanderfolgend die folgenden Schritte:
- Zusammenfügen des Gewindeabschnitts (36) der Schraube mit dem Gewindeabschnitt (66) der Hülse, wobei der Verformungsbereich (78) des Körpers der Hülse in einer zylindrischen Anfangskonfiguration ist;
- Einsetzen der Hülse in die Bohrung (20) der Struktur auf der Seite der ersten Oberfläche;
- Halten des Bunds (70) in Kontakt mit der ersten Oberfläche und axiales Ziehen an der Schraube (30), sodass der Verformungszone (78) des Hülsenkörpers verformt wird, um die äußere Wölbung (80) der installierten Konfiguration zu bilden, wobei gleichzeitig die innere Ausbauchung (82) des Klemmbereichs (76) gebildet wird; und
- Einschrauben der Schraube in die Hülse, bis der Kopf (40) der Schraube und der Bund (70) der Hülse in Kontakt kommen, wobei der zweite Abschnitt (46) des Schafts der Schraube dann gegenüber der inneren Ausbauchung (82) angeordnet ist.

10. Verfahren zum Installieren nach Anspruch 9 einer Anordnung nach Anspruch 8, wobei das Verfahren anschließend einen Schritt zum Trennen des Greifelements (42) von dem Kopf (40) der Schraube durch Brechen der Bruchkehle (62) umfasst.

## Claims

1. An assembly (10) comprising:
- at least one structure (12) comprising first (16) and second (18) opposing surfaces and a bore (20) opening into each of said surfaces; and
- a rivet comprising:
- a screw (30) comprising: a threaded portion (36), a shank (38) and a head (40); and
- a socket (32) comprising: a body (68), said body comprising a substantially cylindrical clamping area (76) adapted to receive the shank of the screw, and a deformation area (78) adjacent to the clamping area; a flange (70) adjacent to the clamping area adapted to receive the head of the screw; and a threaded portion (66) adjacent to the deformation area adapted to mate with the threaded portion of the screw;
the screw shank (38) having first (44) and second (46) cylindrical portions joined by a shoulder (48), the first portion being adjacent the head and having a first diameter (50), the second portion being adjacent to the threaded portion and having a second diameter (52), less than the first diameter,
wherein:
- the flange (70) of the socket is in contact with the first surface (16);
- the head (40) of the screw is in contact with said flange;
- the deformation area (78) of the socket body from an initial substantially cylindrical configuration is, in an installed configuration, in the form of an external bulb (80) in contact with the second surface; and
- the clamping area (76) of the socket body has an internal bulge (82) adjacent to the external bulb, said internal bulge being disposed opposite the second portion (46) of the screw shank.

2. The assembly according to claim 1, wherein the second diameter (52) of the screw shank is between 80% and 95% of the first diameter (50) of said shank.

3. The assembly according to claim 1 or claim 2, wherein the shoulder is configured to form a smooth transition between the first (50) and second (52) diameters.

4. The assembly according to any of the preceding claims, wherein a maximum diameter of the threaded portion (36) of the screw is less than or equal to the first diameter (50) of the first portion (46) of the shank (38).

5. The assembly according to any of the preceding claims, wherein a maximum diameter of the threaded portion (36) is less than or equal to the second diameter (52) of the second portion (46) of the shank (38).

6. The assembly according to any of the preceding claims, wherein the rivet has a maximum tightening capacity (Gₘₐₓ) and a minimum tightening capacity (Gₘᵢₙ), a length of the second portion (46) of the screw shank corresponding to a difference between said maximum and minimum tightening capacities.

7. The assembly according to any of the preceding claims, wherein a radial space (84) is provided between the internal bulge (82) of the sleeve and the second portion (46) of the screw shank.

8. The assembly according to any of the preceding claims, wherein the screw (30) of the rivet (14) further comprises a gripping element (42) connected to the head (40) by a breakaway groove (62).

9. A method for installing an assembly according to any of the preceding claims from a rivet comprising:
- a screw (30) comprising: a threaded portion (36), a shank (38) and a head (40); and
- a socket (32) comprising: a substantially cylindrical body (68), said body comprising a clamping area (76) adapted to receive the shank of the screw, and a deformation area (78) adjacent to the clamping area and able to form an external bulb (80); a flange (70) adjacent to the clamping area adapted to receive the head of the screw; and a threaded portion (66) adjacent to the deformation area adapted to mate with the threaded portion of the screw;
the screw shank (38) having first (44) and second (46) cylindrical portions joined by a shoulder (48), the first portion being adjacent the head and having a first diameter (50), the second portion being adjacent to the threaded portion and having a second diameter (52), less than the first diameter,
said method comprising the following steps in succession:
- assembling the threaded portion (36) of the screw to the threaded portion (66) of the socket, the deformation area (78) of the socket body being in an initial cylindrical configuration;
- inserting the sleeve into the bore (20) of the structure, on the side of the first surface;
- holding the flange (70) in contact with the first surface and pulling axially on the screw (30), so as to deform the deformation area (78) of the sleeve body to form the outer bulb (80) of the installed configuration, the internal bulge (82) of the clamping area (76) being simultaneously formed; and
- screwing the screw into the socket until the head (40) of the screw and the flange (70) of the socket are in contact, the second portion (46) of the shaft of the screw then being arranged opposite the internal bulge (82).

10. The method according to claim 9 for installing an assembly according to claim 8, the method then comprising a step of separating the gripping element (42) from the head (40) of the screw by breaking the breakaway groove (62).
